(19) 
**Europäisches Patentamt**
**European Patent Office**
**Office européen des brevets**

(11) **EP 3 090 908 A1**

(12) **EUROPEAN PATENT APPLICATION**
published in accordance with Art. 153(4) EPC

(43) Date of publication:
**09.11.2016 Bulletin 2016/45**

(51) Int Cl.:
***B60T 8/176*** *(2006.01)*          ***G05B 11/36*** *(2006.01)*

(21) Application number: **14875941.8**

(86) International application number:
**PCT/ES2014/000173**

(22) Date of filing: **16.10.2014**

(87) International publication number:
**WO 2015/101679 (09.07.2015 Gazette 2015/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.01.2014 ES 201400003**

(71) Applicant: **Universidad de Vigo**
**36310 Vigo (ES)**

(72) Inventors:
• **DELGADO ROMERO, María Emma**
  **E-36310 Vigo (ES)**
• **DÍAZ-CACHO MEDINA, Miguel Ramón**
  **E-36310 Vigo (ES)**
• **BARREIRO BLAS, Antonio**
  **E-36310 Vigo (ES)**

(74) Representative: **Carvajal y Urquijo, Isabel**
**Clarke, Modet & Co.**
**Suero de Quiñones, 34-36**
**28002 Madrid (ES)**

(54) **WHEEL SLIP RESET CONTROLLER FOR BRAKING SYSTEMS**

(57)     The invention relates to a slip reset controller for vehicle braking systems, which controller provides a signal (u) that is transmitted via the communication network to a local actuator, which provides a signal (u) on the basis of a signal generated by a supervisory module and a signal generated by a slip estimation module, and wherein a slip estimation module generates a signal based on a signal provided by a sensory information module and a signal generated by a speed estimation module, on the basis of sensory measurements provided by a sensory information module. The invention also relates to a method for designing a slip reset controller for vehicle braking systems.

FIG. 2

**Description**

**Field of the art**

The present invention belongs to the field of control systems, more specifically to that of motor vehicle braking system controllers, and particularly describes a wheel slip reset controller for braking systems.

**Background of the invention - State of the art**

Most braking systems available on the market are conventional ABS (Anti-Lock Braking System) systems having hydraulic actuators (hydraulic valves). The main objective of this system is to prevent wheel lock under emergency braking, thereby maintaining vehicle steering capacity in addition to shortening braking distance, as the maximum tyre-to-road friction is reached with the wheel rotating, unlocked. In this case, the control strategy is based on angular wheel speed measurements and indirectly regulates the slip, controlling its acceleration/deceleration.

In order to improve flexibility, precision and functionality, state-of-the-art braking systems include electromechanical technology, which, as opposed to conventional systems, makes it possible to generate and continuously vary independent braking forces on the four wheels. With electromechanical actuators, the driver's action on the brake pedal is converted into electrical signals, which are transmitted via microcontrollers to the brake actuators. Therefore, there is no hydraulic connection between the pedal and the actuators, and allows a continuous and more accurate adjustment of the braking force. In addition, they allow for a direct control of the slip in each wheel, thereby enhancing the features of the braking system and vehicle driving characteristics acting on different high-level control modules such as ABS (Anti-Lock Braking System), TC (traction control), VSC (Vehicle Stability Control), ESP (Electronic Stability Protocol), active safety systems and ADAS (Advanced Driver Assistance Systems).

In this context, work has been carried out on high-performance slip controllers whose objective is to maintain, in a smooth and independent manner, a certain slipping degree in each wheel to maximise the adherence between the tyre and the road under different conditions, simultaneously preventing the wheel from locking.

Recent research in this field studies the design of slip controllers based, inter alia, on adaptive control, gain-scheduling, sliding modes, fuzzy control and multiple compensators with proportional, integral and derivative actions (multiple PIDs). In general, they use various compensators to achieve the objectives established, which hampers design and versatility. The different compensators come into action according to speed, according to the range of slip values or according to road surface conditions. In addition, there is a manifest need for readjustments and improvements, due mainly to overshoots in the transient, with the ensuing increase in the time in which the system output reaches the reference value, resulting in a longer braking distance, a sudden action and even, in extreme situations, loss of control of the vehicle in changing situations of the road or delay in the communications between sensors, controllers and actuators.

The concept of reset controller was originally proposed in isolated works, carried out by Clegg (Clegg integrator) in the 1950s and by Horowitz (First-Order Reset Element or FORE) in the 1970s. They are characterised in that they have non-linear elements, which can contribute with improvements in effectiveness and speed of correction in the output signal. Their operation is based on put to zero (or reset) the controller output or the output of one of the elements of the controller, at those time instants where the controller input signal is zero.

In this pioneering work, the potential interest of the reset controllers as means for overcoming basic limitations that affect many automated control applications was highlighted. However, due to the lack of development of the non-linear stability techniques that would guarantee the robustness of those proposals, these ideas were abandoned for various decades.

Recently, associated with the current boom of the hybrid control techniques, reset-based control has received new impulse, supported by an already mature methodology for analysing, designing and validating such controllers. A proposal of special practical interest is that of the PI+CI compensator, which combines the advantages of a standard compensator such as the proportional-integral (PI) compensator with the complementary action of a Clegg integrator (CI).

There are three main approaches in the design of reset compensators. The first is that based on the zero-crossing of the tracking error signal. The second is that based on the verification of conditions (belonging to a conic section) by said error signal. The third is based on applying reset using purely temporary criteria (at specified time instants). There is certain similarity between the first two approaches, which are quite faithful to Horowitz's original ideas and seek to overcome performance limitations.

There are different strategies among zero-crossing-based tracking error signal compensators that seek to optimise features. In order to improve the stationary, it can be proposed that, rather than resetting the status of the compensator to zero, it be reset to a non-null percentage (for example, 20 % of the previous value). In order to improve the transit and reaction speed, anticipative strategies may be adopted, i.e. applied prior to the zero-crossing error (by means of a band or margin, or by means of temporary anticipation).

Description of the invention

Based on the foregoing, an objective of the present invention is to provide a wheel slip controller, which is versatile and has a simple design, that simultaneously has enhanced features, i.e. it shortens the braking distance under different road conditions, maintaining adequate vehicle driving features to the extent possible, and is robust with respect to technological limitations such as measurement noise in sensors, saturation of actuators and delay in communications.

This objective is achieved in accordance with claim 1, with a slip reset controller that makes it possible to overcome trade-offs or compromised objectives: using conventional controllers, if a quick braking response is sought, the system is fragile and sensitive to uncertainties; and, if a robust system is sought, it requires slower braking actions. The proposal put forward succeeds in improving, simultaneously and to the extent possible, both braking speed and robustness against unforeseen conditions. In addition, in order to simplify the design, the invention provides a method for designing a wheel slip reset controller and a maximum friction estimator that characterises each type of road surface or conditions.

Other areas of applicability of the present invention will be evident from the detailed description provided hereinafter. It must be understood that the detailed description and specific examples, while indicating the preferred embodiment of the invention, are solely provided for illustrative purposes and are not intended to limit the scope of the invention.

Recent research in the field of wheel slip control reveals that it is a very difficult problem and subject to highly restrictive limitations, the efficient solution of which could be favoured by the application of reset controllers.

Specifically and more precisely, the problem of controlling the tyre-to-road slip ($\lambda$) of a wheel can be modelled, in fast time scales, as a first-order differential equation, controlled or regulated by the braking action or torque ($T_b$). That is, it is a differential equation:

$$d\lambda(t)\,/dt = F(\,\lambda(t),\ Tb(t)\,)$$

where $d\lambda(t)/dt$ is the slip variation per unit of time. The problem is that the dependence relationship given by function F is highly non-linear and subject to uncertainty. This is because tyre-to-road grip has two differentiated behaviour regions: in the case of minor slip, the greater the slip the greater the grip force, which is a beneficial and stabilising effect. However, upon exceeding a certain threshold, the greater the slip the weaker the grip force. This is an adherence loss phenomenon which has catastrophic consequences and which directly affects the selection of the optimum slip setpoint signal that must be imposed on the controller. Conventional methods establish this setpoint in the slip value where the maximum friction is obtained. In addition to fragility from the control viewpoint, this strategy results in sudden corrective actions that give rise to vibrations and inadequate vehicle driving characteristics. While the problem thus raised is already complex, the situation is further aggravated if ground characteristics change for any reason. Passage, even momentary, over non-adherent ground with oil or ice may cause the working point to be displaced to the weakened grip area, with ensuing risk of losing control of the vehicle. Therefore, it is of vital importance, in addition to the aforementioned selection of the setpoint signal, to estimate the maximum friction that characterises each type of road surface or conditions and include said information in the control loop.

Another relevant and complex aspect of slip dynamics is its scaling with respect to inverse vehicle speed, which causes dependence between the system's speed and bandwidth: the greater the speed, the smaller the bandwidth.

It should also be taken into account that there is a time interval between when the controller calculates the corrective action in the central electronic control unit and when said corrective action is transmitted via the communications channel to each local wheel braking unit. Thus, a destabilising delay element appears in the control loop. In turn, the dynamics inherent to the actuators include non-linearities, namely saturation which, in practice, limits the value of the corrective action established by the controller.

In order to resolve the technical problem raised, this invention provides a wheel slip reset controller, which enables the system's features to be improved: less transient and fewer oscillations, robustness against temporary delays in the control action, against changes in road conditions, against uncertainties and against changes in the setpoint value, even in values close to maximum friction. This improvement results mainly in a shorter braking distance and a more accurate estimation of the tyre-to-ground friction coefficient.

In accordance with another aspect, simplicity and versatility, the invention provides a method for designing a wheel slip reset controller and a maximum friction estimator that characterises each type of road surface or conditions. It is an analytical method based on a simplified model of the vehicle, which includes tyre-to-road interaction or friction curves and also includes technological limitations such as model uncertainty, saturation of the actuator and delay in communications. The definition of a basic control structure that includes the slip reset controller and the different blocks that make up the model and the estimator, makes it possible to select, according to methods known in the state of the art, the parameters of the slip reset controller and of the maximum friction estimator.

The slip reset controller of each of the wheels will be executed in a central electronic control unit which, on the basis of sensory measurements or estimations of certain magnitudes involved, will calculate the actuation (braking torque) for each of the wheels and will transmit it through the network by means of a communication protocol to the four local electronic braking control units.

Its operation involves interacting with different modules that provide it with the input signals and other modules to which the controller sends the corrective action to regulate slip. From the high-level supervisor module it requires the optimum slip setpoint signal $\lambda_x^*$. From the slip estimator module it requires a second current wheel slip input signal $\lambda_x$, estimated in the slip estimator module, based on angular wheel speed $\omega$ measurements of the sensory information and the signal $v$ calculated in the speed estimator module. Lastly, from the speed estimator module it may require a third input signal $v$ which is an estimation of vehicle speed calculated based on the sensory information module. The corrective action calculated based on the controller will be transmitted via the communications channel to the local actuator module.

The slip reset controller implements a feedback control action on the wheel slip wherein, basically, a certain desired optimum slip setpoint signal that is compared with current wheel slip is established and a corrective action in accordance with this difference is calculated by means of a reset compensator, such that its integral term will be reset to zero or to a non-null percentage of the previous value (reset action), fully or partially, at the time instants in which the difference is zero (or at the time instants adopted by means of anticipative strategies), and will adjust current slip at a given time until the desired value is reached.

Among reset-based controllers, there are different variants that can be classified, firstly, in accordance with the reset condition, i.e. when reset or restart is applied and, secondly, in accordance with how said reset action is materialised.

With respect to the reset condition, i.e. when the reset event is triggered, there are three main approaches. The first is based on the zero-crossing of the tracking error signal, i.e. the reset event is activated exactly when e(t)=0. The second is based on the verification of other, more general conditions (belonging to a conic section) by said error signal, said conditions being as follows: F(e(t), de(t)/dt)=0, where F(x,y) with x=e(t), y=de/dt is a quadratic equation, for example F(x,y)=x^2 - y^2. The third is based on activating the reset on the basis of purely time-based criteria, i.e. on pre-established time instants t, for example, every 0.1 seconds. There is a certain similarity between the first two approaches, which are more faithful to Horowitz's original ideas and seek to exceed performance limitations. In other variants, the 0 is replaced by a small band or margin of approximately 0. For example, instead of e(t)=0, they are based on the modified event $-\delta<e(t)<+8$, where $\delta$ is a low value.

As regards the reset action, i.e. what action is applied to the controller variables in general or, more specifically, to the integral of the error, the reset action normally consists of putting said integral variable completely to 0, i.e. resetting it to 0. However, in order to improve the stationary accuracy of the regulators, it can be proposed that, instead of resetting the error integral to 0, it be reset to a non-null percentage (for example at 20 % of the previous value). For example, if when the reset condition is activated (because e(t)=0) at that moment the error integral is equal to i(t)=1000 and if a reset percentage of 20 % is used, then the reset action consists of suddenly changing the value of i(t) from i(t)=1000 to the new value i(t)=200.

The possible variants of the reset condition and the reset action are not limited to those mentioned in the two preceding paragraphs. What characterises a reset controller is that it is based on a conventional controller into which some form of reset events are incorporated, which give rise to some form of reset actions.

In a preferred embodiment, the invention comprises a reset compensator, a multiplier, a comparator and a decision module of the reset percentage. Two signals are received at the inlet of the reset compensator: an error signal e, resulting from the product obtained, using the multiplier, from the vehicle speed signal $v$ with the slip error signal $e_\lambda$, received from the comparator, where the subtraction of the optimum slip setpoint signal $\lambda_x^*$ and the current wheel slip $\lambda_x$ takes place; and a second signal $p_r$ which is the optimum reset percentage, expressed on a per unit basis, that will be applied to the reset compensator, obtained in the decision module of the reset percentage based on the current optimum slip setpoint signal $\lambda_x^*$ and speed $v$ at the initial time instant.

In this preferred embodiment of the invention, the error signal e = v*$e_\lambda$ is selected as one of the input signals to the reset compensator in order to simplify the number of necessary compensators due to the dependence of slip on the speed. It will make it possible, through a single reset compensator, to ensure high gains at high speeds and to have good behaviour for different speeds with a minimum number of design parameters.

The decision module of the reset percentage included in the slip reset controller, in accordance with the invention, may establish the scope of the reset action (full or partial) on the integral term and fine adjustment of the signal $p_r$ which is the reset percentage to be applied, taking into account factors such as current setpoint and speed. It offers improvements with respect to the option of selecting a constant $p_r$ value, particularly in the case of a change in braking setpoint managed by a supervisor module.

The output signal of the reset compensator will be the control signal $u$, whose integral term will be set to zero or to a non-null percentage of the previous value (reset action), fully or partially, at the time instants where the input signal e at the compensator is zero (or at the time instants adopted by means of anticipative strategies). By means of this connection configuration, the reset compensator will adjust the system so that the current slip value is similar to the setpoint value, by applying the correction signal *u.*

The reset compensator proposed in the preferred embodiment in accordance with the invention is the PI+CI compensator according to the state of the art, which combines the advantages of a standard compensator, such as the proportional-integral (PI) compensator, with the complementary action of a Clegg integrator (CI). The mathematical description of the control action *u* is a function of the error signal e:

$$u(t) = K_p e(t) + (1 - p_{reset}) K_i \int_0^t e(\tau) d\tau + p_{reset} K_i \int_{t_i}^t e(\tau) d\tau$$

Where $K_p$ and $K_i$ are the proportional and integral gains. The $p_{reset}$ factor, with $0 < p_{reset} < 1$, represents the part of the integral term upon which the reset action is applied and is used to achieve the partial reset of the integral term. In the case of $p_r = 0$, it means that the reset has not been performed and, therefore, the compensator would be a conventional P+I compensator, and with $p_r = 1$, it means that a full reset has been performed, such that the compensator acts like a P+CI.

Although in a preferred embodiment of the invention the proportional and integral terms with full or partial reset have been selected, the reset compensator may include a derivative term, similarly to conventional compensators (PID), the control action *u* in this case being a function of the error signal e:

$$u(t) = K_p e(t) + (1 - p_{reset}) K_i \int_0^t e(\tau) d\tau + p_{reset} K_i \int_{t_i}^t e(\tau) d\tau + K_d \frac{de(t)}{dt}$$

In another aspect of the invention, a method is described for the simultaneous design of a wheel slip reset controller and of a maximum friction estimator that comprises the following steps:

1. Modelling: of the tyre-to-road interaction or friction curves, of the simplified vehicle dynamics, of the delay in communications, of the saturation of the actuators, of the estimator of maximum tyre-to-road friction.
2. Definition of a basic slip reset control structure: configuration of the control loop of the slip reset controller and of the basic modelling blocks in the preceding step, and of the signal flow therebetween.
3. Establishment of the control objectives: minimise braking distance, avoid wheel lock by maintaining adequate vehicle driving characteristics and robustness against technological limitations (sensory measurement noise, saturation of the actuators, delay in communications) and changes in road surface conditions. Selection of the optimum slip setpoint signal.
4. Calculation of parameters: of the slip reset controller and of the estimator.

In this way, in a preferred embodiment of the invention, the design is approached with the model known as ¼ vehicle, which consists of a single wheel joined to a longitudinally moving mass. As the wheel moves, driven by the inertia of the mass in the direction of the speed, a reaction force is generated by the friction between the tyre surface and the road surface. The tyre reaction force generates torque that results in the rotational movement of the tyre. Under these conditions, braking torque applied to the wheel will act causing negative angular acceleration. The longitudinal tyre-to-road friction force is modelled based on the simplified expression with Pacejka constant coefficients for longitudinal movement. Simplification based on longitudinal movement is appropriate because, according to the state of the art, if the regulated longitudinal slip is maintained in the linear and stable area close to the value at which maximum longitudinal friction is obtained, a reasonable compromise is reached between high longitudinal and lateral friction for all road surface conditions.

As regards the maximum friction estimator that characterises the type of road surface, in a preferred embodiment of the invention, an estimator based on recursive least squares with forgetting factor, which takes the input data from the ¼ model, is chosen.

The basic slip reset control structure proposed in a preferred embodiment of the invention is a series configuration. It comprises an estimator block of $\mu_H$ (maximum tyre-to-road friction), a ¼ model, a delay element, a saturation element and a slip reset controller.

In order to achieve the control and estimation objectives, the selection of the optimum slip setpoint signal is key. It must be established in the stable linear zone, close to the maximum friction value.

Once the first three steps of the method have been concluded, the slip reset controller parameters (proportional gain, integral gain, derivative gain, reset factor) and estimator parameters (filter length, forgetting factor, initial value of the estimation variance) can be calculated according to the methods described in the state of the art.

**Brief description of the drawings**

In order to better understand the foregoing, an embodiment has been represented by way of a non-limiting example in the following accompanying drawings.
In the drawings,

Figure 1 shows an implementation and signal flow diagram, in accordance with the invention;
Figure 2 shows a schematic view of a slip reset controller, in accordance with the invention;
Figure 3 shows a schematic view of a reset PI+CI compensator, in accordance with the state of the art;
Figure 4 shows a schematic view of a basic slip reset control structure, in accordance with the invention;
Figure 5 shows a graphic representation of typical friction curves, according to the state of the art;
Figure 6 shows a graphic representation of a first situation of the response with respect to time in the case an optimum slip setpoint fixed at the boundary of the stable linear zone (a) and to a slip setpoint equal to $\lambda_{xH}$ (maximum friction is obtained) (b); of the control signal with respect to time in the case of an optimum slip setpoint fixed at the boundary of the stable linear zone (c) and a slip setpoint equal to $\lambda_{xH}$ (d).

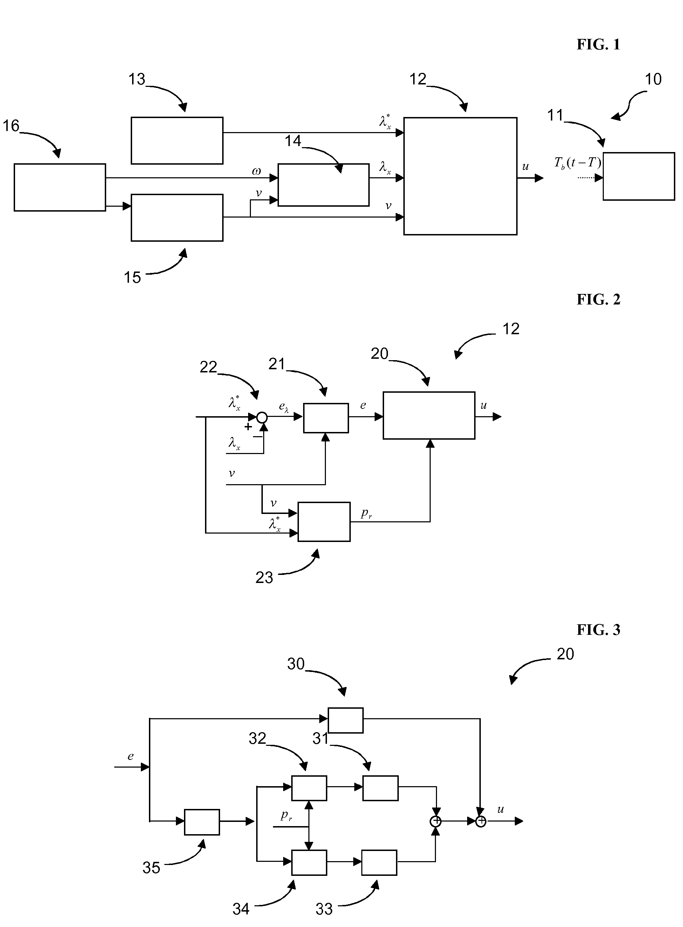

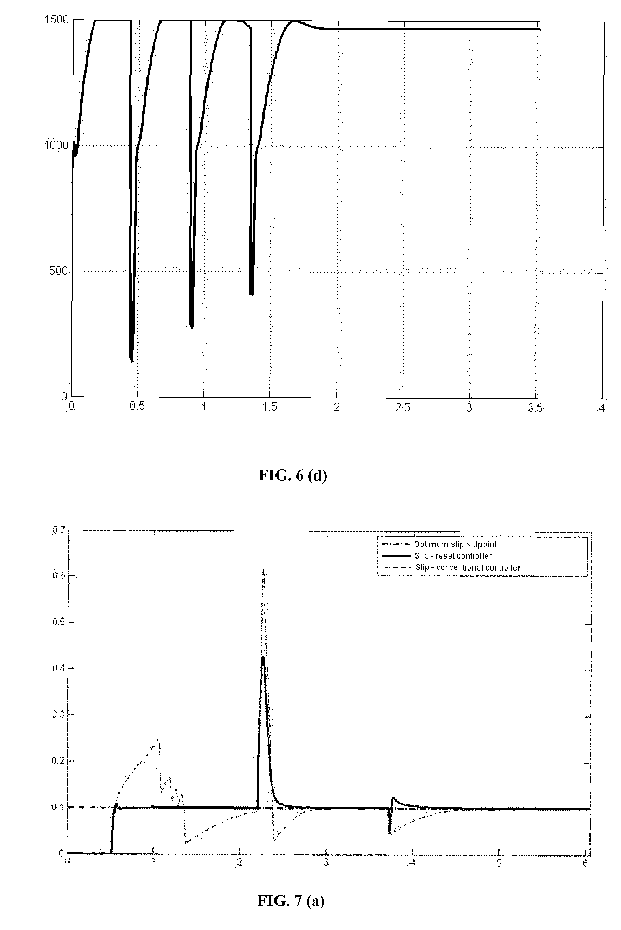

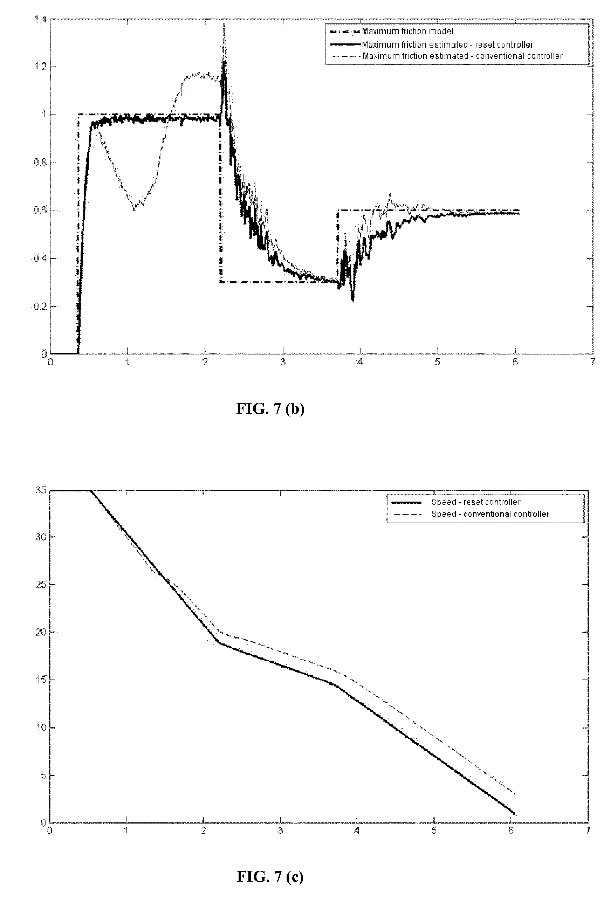

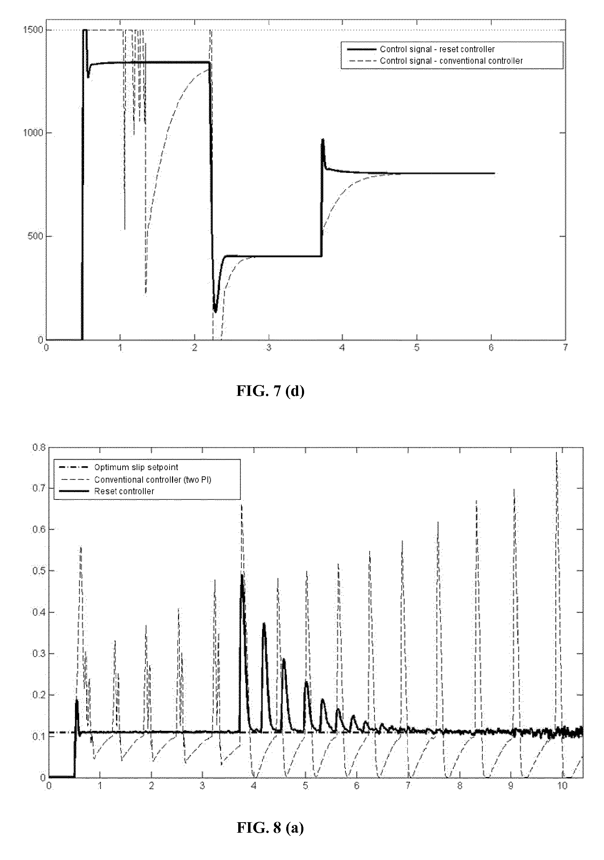

Figure 7 shows a graphic representation in a second situation of the response of two systems with respect to time in the case of a slip setpoint signal (a), of the estimation of the maximum friction $\hat{\mu}_H$ that characterises the type of road surface with respect to time (b), of the speed of two systems with respect to time in the case of a slip setpoint signal in the braking system (c), of the control signal with respect to time (d); one of the systems being formed by the ¼ model and two PI compensators and the other being formed by the ¼ model and a reset controller in accordance with figure 2.

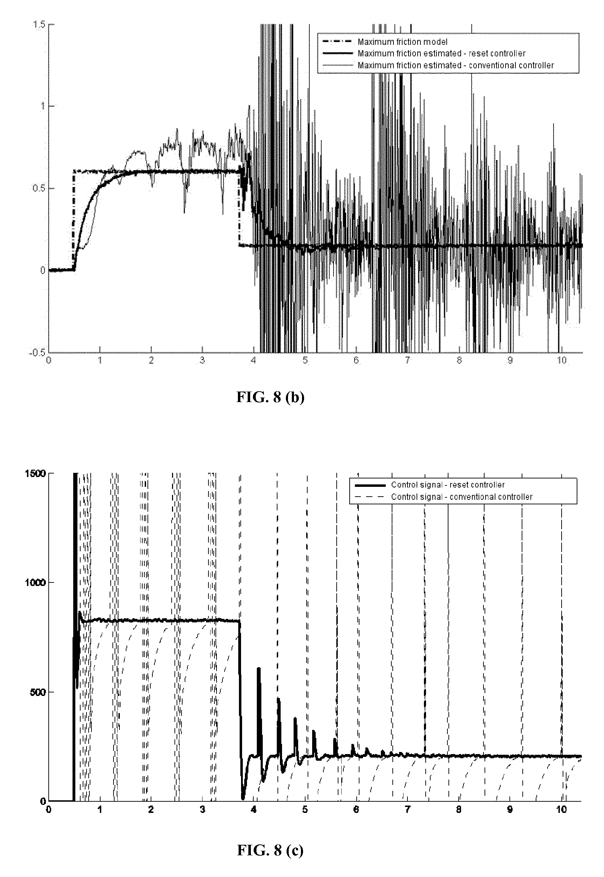

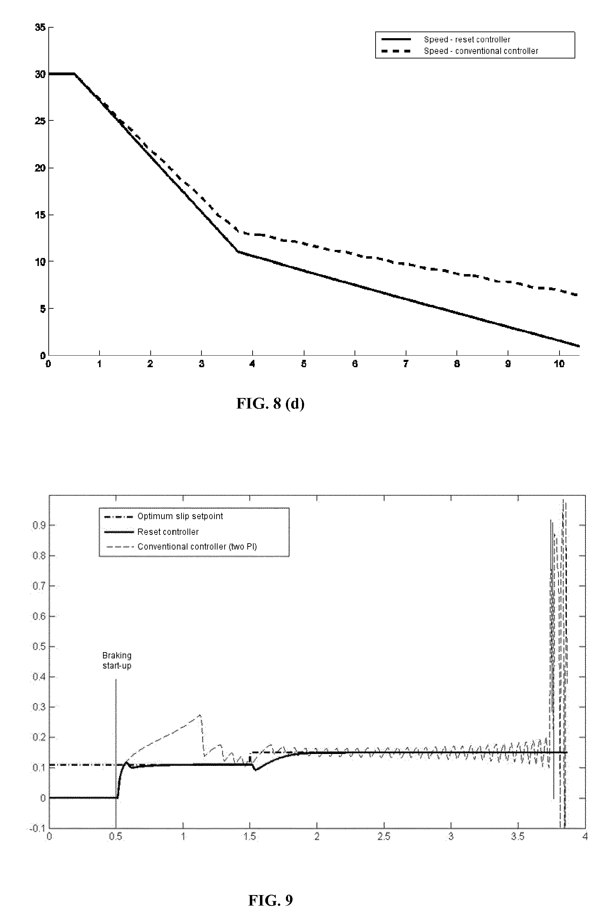

Figure 8 shows a graphic representation in a third situation of the response of two systems with respect to time in the case of a slip setpoint signal (a), of the estimation of maximum friction $\hat{\mu}_H$ that characterises the type of road surface with respect to time (b), of the speed of two systems with respect to time in the case of a slip setpoint signal in the braking system (c), of the control signal with respect to time (d); one of the systems being formed by the ¼ model and two PI compensators and the other being formed by the ¼ model and a reset controller in accordance with figure 2.
Figure 9 shows a graphic representation of the response of two systems with respect to a variable slip setpoint signal, one of the systems being formed by the ¼ model and two PI compensators and the other being formed by the ¼ model and a reset controller in accordance with figure 2.

**Description of a preferred embodiment of the invention**

A description of a slip reset controller, in accordance with the invention, is provided below.
The key idea in control in vehicle dynamics is integration: different levels in a hierarchical structure with different functionalities that interact to improve vehicle driving characteristics. One of the subsystems would be the braking subsystems, which the slip controller forms part of. The slip controller of each of the wheels would be executed in a central electronic control unit, which would communicate with the sensors and with the four electronic control units of the four actuators or brakes via a communication protocol.
As can be observed in figure 1, the implementation and signal flow diagram (10) represents the modules or elements involved in the implementation of a slip reset controller (12) object of the present invention. It comprises a local actuator (11), a high-level supervisor module (13), a slip estimator (14), a vehicle speed estimator (15) and sensory information (16). Three signals are received at the inlet of the controller (12). An optimum slip setpoint signal $\lambda_x^*$, which may be predefined and constant or may be commanded from a high-level supervisor module (13). A signal $v$, which is an estimation of vehicle speed calculated in the speed estimator module (15) on the basis of sensory measurements from the sensory information module (16). And, lastly, a current wheel slip signal $\lambda_x$ estimated in the slip estimator module (14) based on measurements of the sensory information module (16) of angular wheel speed $\omega$ and the signal $v$, calculated in the speed estimator module (15). The control signal $u$ calculated in the central unit is obtained by way of controller output. The signal $T_b(t\text{-}T)$ is received at the inlet of the local actuator (11), the delayed limited actuation is transmitted via the communication channel to the brakes.
Figure 2 shows a schematic representation of a slip reset controller (12), in accordance with the invention. It comprises a reset compensator (20), a multiplier (21), a comparator (22) and a calculation module of the reset percentage (23). Two signals are received at the inlet of the reset compensator (20): an error signal e, resulting from the product obtained, using the multiplier (21), from the vehicle speed signal $v$, with the slip error signal $e_\lambda$, received from the comparator (22), where the subtraction of the optimum slip setpoint signal $\lambda_x^*$ and the current wheel slip $\lambda_x$ takes place; and a second signal $p_r$ which is the optimum reset percentage, expressed on a per unit basis, that will be applied to the reset compensator (20), obtained in the calculation module of the reset percentage (23) based on the current optimum slip setpoint signal $\lambda_x^*$ and speed $v$ at the initial time instant. The output signal of the reset compensator (20) will be the control signal $u$, whose integral term will be put to zero or to a non-null percentage of the previous value (reset action), fully or partially, at the time instants in which the input signal e at the compensator is zero (or at the time instants adopted by means of anticipative strategies). Through this connection configuration, the reset compensator (20) will adjust the system so that the current slip value at a given time is close to the setpoint value, by applying the correction signal $u$.

The calculation module of the reset percentage (23) included in the slip reset controller (12), in accordance with the invention, may finely adjust the signal $p_r$, which is the reset percentage to be applied, thereby allowing the application of variable or gain-scheduled $p_r$. Factors such as current setpoint and speed are taken into account. It offers improvements over the option of choosing a constant $p_r$ value, particularly in the case of a change in braking setpoint managed by a supervisor module. In the examples provided, it is performed by means of a look-up table.

The reset compensator (20) proposed in the preferred embodiment in accordance with the invention is the PI+CI compensator according to the state of the art (patent ES 2 323 833 A1), whose schematic representation is shown in figure 3. It comprises a proportional element (30) that corresponds to a proportional gain $K_p$ and integral compensation means (31 to 35), said integral compensation means being arranged parallel to the proportional element (30). The integral compensation means (31 to 35) comprise a Clegg integrator (CI) (31) and an integral element (33), which is arranged parallel to the Clegg integrator (CI) (31); a block (32) that multiplies the Clegg integrator (CI) (31) by the *reset percentage* $p_r$, expressed on a per unit basis, of the Clegg integrator; a block (34) that multiplies the integral element (33) by the parameter 1-$p_r$, expressed on a per unit basis, of the integral element (33); and a block (26) that corresponds to the integral gain $K_i$. The signals that enter at the reset compensator (20) are the error signal e and the signal $p_r$, which is the reset percentage, while the output signal is the control action $u$. When the value of the error signal e is zero, the output value of the integral compensation means (31 to 35) is different to zero, such that a partial reset action is performed on the integral compensation means.

It is a compensator whose behaviour is identical to a PI at those time instants in which a reset is not performed, while at the reset time instants not all the integral term is reset to zero, but rather only the part corresponding to the Clegg integrator (31), such that the asymptotic properties of the compensator are maintained.

A method is proposed for designing the slip reset controller (12), object of the present invention, and the maximum friction estimator, which comprises the following steps:

1. Modelling:

The so-called ¼ model according to the state of the art is established, which consists of a single wheel joined to a longitudinally moving mass. Being v [m/s] the longitudinal vehicle displacement speed (also referenced as vehicle speed) and the angular speed ω [rad/s] of the wheel, the equations are:

$$m\dot{v} = -f_x, \qquad J\dot{\omega} = rf_x - T_b$$

where r is the effective wheel radius, $m$ is ¼ of vehicle mass, $T_b$ is the braking torque (also referenced as limited actuation, due to the technological saturation limitation in actuator dynamics) and $f_x$ is the longitudinal tyre-to-road friction:

$$f_x = f_z \mu(\lambda_x, \mu_H), \qquad \lambda_x = \frac{v - r\omega}{v}$$

With $f_z$ being the normal load, $\mu$ being the normalised non-linear friction function, $\lambda_x$ being the longitudinal slip (also referenced as current slip), $\mu_H$ being the maximum friction value between the tyre and the road surface conditions. The value $\lambda_x = 0$ describes unrestricted movement (ω = v/r) and $\lambda_x = 1$ is generated when the wheel locks (ω = 0). The function $\mu(\cdot)$, based on the Pacejka model for longitudinal movement, is obtained from the simplified expression with constant coefficients according to the state of the art:

$$f_x = D(\mu_H)\sin\{C \cdot arctg[B \cdot \lambda_x - E(B \cdot \lambda_x - arctg(B \cdot \lambda_x))]\} = f_z\mu(\lambda_x, \mu_H)$$

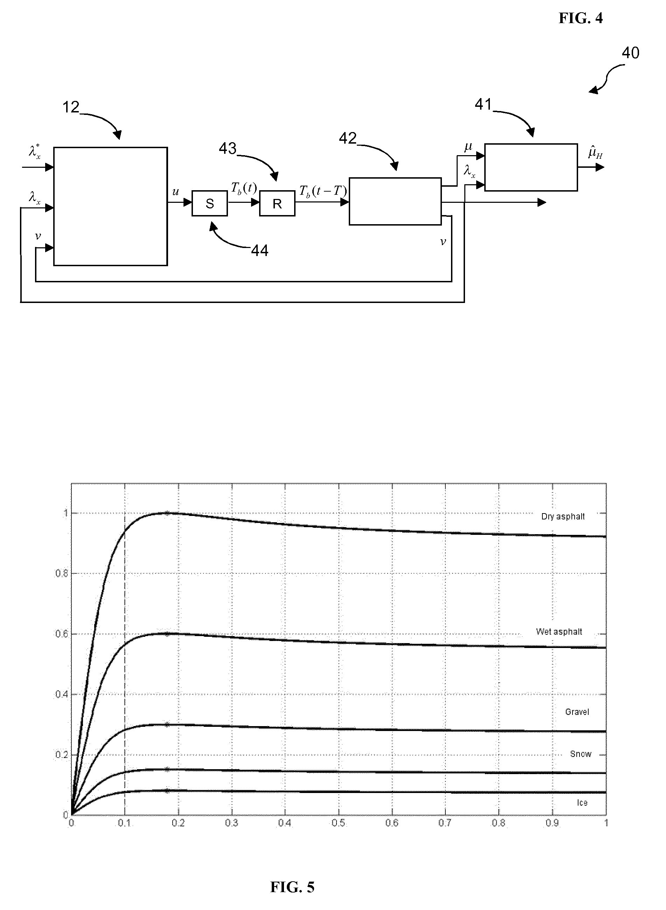

Where $B$, $C$, $D(\mu_H)$, $E$ are factors that depend on the type of tyre, speed, load and ground characteristics. Figure 5 shows a family of typical, normalised friction curves for different road conditions characterised by their maximum friction values $\mu_H$.

Simplification based on longitudinal movement is appropriate because, according to the state of the art, if the regulated longitudinal slip remains close on the left to the slip value ($\lambda_{xH}$) wherein the maximum longitudinal friction $\mu_H$ is obtained, a reasonable compromise between high longitudinal and lateral friction is reached for all road surface conditions.

The simplified model on which the design proposed is based, is finally summarised in the following equations, where the constant values $\alpha = r/J$, $\beta = (f_z r^2)/J$ are considered. Delay in communications $T$ is also included, which represents the time interval between when the controller calculates the corrective action in the electronic central control unit and when said corrective action is transmitted via the communications channel to each local braking unit in the wheel.

$$\dot{v} = -\frac{f_z\mu}{m}, \qquad \dot{\lambda}_x = \frac{1}{v}\left(-\beta \cdot \mu + \alpha \cdot T_b(t-T)\right)$$

This model includes the main control difficulties that appear in the braking system. In relation to tyre-to-road interaction, by locally linearising $\mu$ at operating points, first-order systems with delay are obtained, which are stable or unstable, depending on whether the gradient is positive (on the left of the peak value $\mu_H$) or negative (on the right of the peak value $\mu_H$). Secondly, the bandwidth of the linear models depends on speed: the greater the speed, the smaller the bandwidth. Lastly, slippage is scaled by the inverse of speed.

2. Definition of a basic slip reset control (40), the diagram of which is shown in figure 4. It comprises a $\mu_H$ (maximum tyre-to-road friction) (41), a ¼ model (42), a delay element (43), a saturation element (44) and a slip reset controller (12).

Three signals are received at the inlet of the slip reset controller (12): an optimum slip setpoint signal $\lambda_x^*$, a signal $v$, which is the current vehicle speed calculated according to the ¼ model (42) and a current slip signal $\lambda_x$ calculated according to the ¼ model (42). A control signal $u$ is received at the inlet of the saturation element (44), which comes from the slip reset controller (12). A limited actuation signal $T_b(t)$ is received at the inlet of the delay element (43), which comes from the saturation element (44). A limited delayed actuation signal $T_b(t-T)$ is received at the inlet of the ¼ model (42), which comes from the delay element (43). The signal $\mu$ (current value of the non-linear friction curve) and the current slip value are found at the inlet of the $\mu_H$ estimator (41), which come from the ¼ model (42); the output of the $\mu_H$ estimator (41) will give the estimated maximum friction $\hat{\mu}_H$, which characterises the type of road surface.

As regards the $\mu_H$ estimator (41) that will provide the estimated maximum friction $\hat{\mu}_H$, which characterises the type of road surface, it is an estimator known in the state of the art based on recursive least squares with forgetting factor. It is assumed that, for the sake of simplicity, current slip $\lambda_x$ and the value $\mu$ (current value of the non-linear friction curve according to a certain road surface), which are obtained from the ¼ model (42), are known. It uses the property that the family of curves of figure 5 has a linear zone for different road surface conditions, on the left of the peak values, with slopes $m_i$, wherein $\mu_i(\lambda_x) = m_i \cdot \lambda_x$ is fulfilled, and the maximum friction $\mu_H$ that represents adherence to the ground can be estimated from the approximation $\mu H_i \approx m_i/10$.

The equations of the estimator of recursive least squares with forgetting factor $f$ in its general expression known in the state of the art, for estimating a parameters vector $\theta$ in the time instant t is summarised as follows:

$$\hat{\theta}(t) = \hat{\theta}(t-1) + K(t)\left(y(t) - \hat{y}(t)\right)$$

$$\hat{y}(t) = \Psi^T(t)\hat{\theta}(t-1)$$

$$K(t) = P(t)\Psi(t)$$

$$P(t) = P(t-1) - \frac{\dfrac{P(t-1)\Psi(t)\Psi^T(t)P(t-1)}{f + \Psi^T(t)\, P(t-1)\, \Psi(t)}}{f}$$

Where $\hat{\theta}(t)$ is the vector of estimated parameters at time instant t, y(t) is the measurements observed in instant *t*, $\hat{y}(t)$ is a prediction of the *y(t)* measurements based on the observations made up to the time instant (t-1) and in the current model at that time instant. Gain *K* determines the manner in which the current prediction error y(t)-$\hat{y}$(t), affects the update of the parametric estimation. Forgetting factor *f* values in the range of 0.97-0.995 are typically chosen. Conceptually, it consists of exponentially attenuating the effect of previous measurements, such that an observation made previous sampling periods includes a weight that is f$^t$ of the weight of the most recent observation.

3. Establishment of control objectives:

The objectives of the control system are as follows: shorter braking distance under different road surface conditions while maintaining adequate vehicle driving characteristics to the extent possible and robust against technological limitations such as sensory measurement noise, saturation of the actuators and delay in the communications.
Due to the aforementioned characteristics related to the friction curves, a key factor for achieving the control and estimation objectives is the selection of the optimum slip setpoint signal $\lambda_x^*$ in the control system. This signal must be established close to the stable linear zone, which is to the left of the maximum friction value (see figure 5).

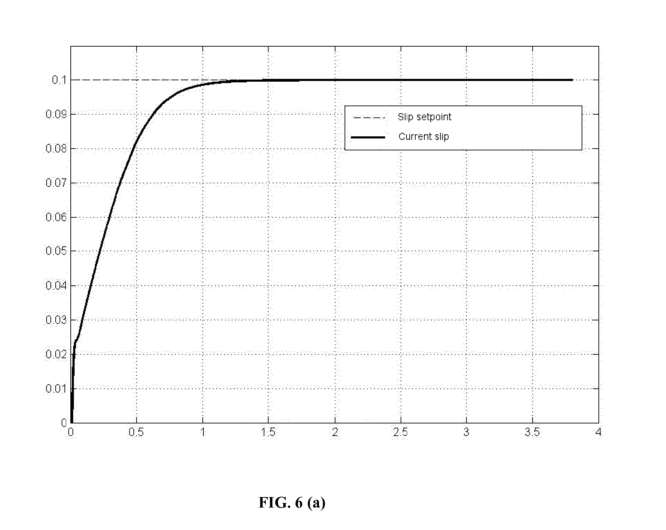

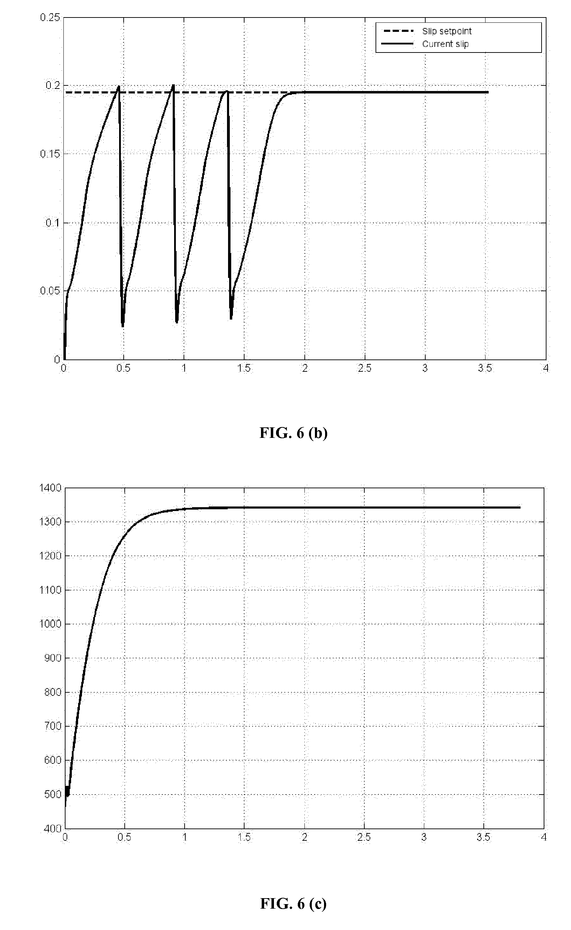

Figure 6 shows how the selection of the slip setpoint affects both setpoint signal tracking and the control action. The figure represents a braking situation on a dry road surface with a slip reset controller according to the invention. Establish the optimum setpoint signal as the slip value where the maximum friction is obtained, as in conventional methods, entails poor signal tracking (many oscillations) which worsens the control system's features and gives rise to sudden, undesired actuation.
Having adequately selected the slip setpoint value, the use of a slip reset controller, characterised by the fact that it has non-linear elements that provide improvements in terms of correction effectiveness and speed of the output signal, enables the system's features and robustness to be improved.

4. Calculation of parameters:

Having established the first three steps of the method, the analytical calculation of the slip reset controller parameters (in a preferred embodiment of the invention: proportional gain, integral gain, reset factor) and the estimator parameters (filter length, forgetting factor, initial value of the estimation variance) can be performed according to the methods known in the state of the art.
In order to expound the advantages of the proposed controller over conventional controllers, simulations of the two control systems will be performed using the same ¼ model (42) and under the same setpoint value, road surface, speed, saturation and delay conditions. The systems differ in the slip controller. In one case it corresponds to a conventional controller formed by two PI compensators having different proportional and integral gains, which act depending on whether the current slip value is below or above a certain threshold, designed according to the state of the art, and, in the second, the controller based on a PI+CI compensator in accordance with figure 2, according to the present invention.
Figure 7 shows a braking situation on a road surface having different adherence conditions (dry asphalt, gravel, wet asphalt). A fixed optimum slip setpoint at the limit of the stable linear zone is imposed. The control is performed using a constant reset percentage. The first figure represents the response of the systems to the input of the setpoint applied. The second shows the results of the estimated maximum friction that characterises each type of road surface. The third shows the reduction in speed and the fourth shows the control action in both cases.
Figure 8 shows a braking situation on a road surface having different adherence conditions (wet asphalt, snow). Inaccuracies in the ¼ model (42) are envisaged, adding noise in the non-linear friction curves ($\mu(\lambda_x, \mu_H \pm \Delta_\mu)$) considering $_D(\mu_H \pm \Delta_\mu)$. A fixed optimum slip setpoint is imposed above the limit of the linear zone and within the stable zone. Control is performed using a constant reset percentage. The four subfigures correspond to those explained for the previous situation.
Figure 9 shows a braking situation on a dry road surface. Inaccuracies in the ¼ model (42) are envisaged, as in the previous case. A variable optimum slip setpoint is imposed: two values in the stable zone (on the left of the peak value), but not in the linear zone. The control is performed using a variable reset percentage established according to the different setpoints and the speed at the start of the braking situation.
As can be observed in the different simulations, the application of reset controllers with respect to conventional controllers makes it possible to enhance the features of the slip control system: less transient and fewer oscillations, robustness against temporary delays in the control action, against changes in the road, against uncertainties in the model and against changes in the setpoint value, even in values close to maximum friction. This improvement results mainly in a shorter braking distance, which, in addition to a possible reduction in the number of controller design parameters, also enables a better estimation of the tyre-to-road friction coefficient.

Despite having described and represented a specific embodiment of the present invention, it is evident that a person skilled in the art may introduce variants and changes, or substitute details for other technically equivalent ones, without detracting from the scope of protection defined by the accompanying claims.

**Claims**

1. A slip reset controller of at least one wheel for vehicle braking systems which provides a signal (u) that is transmitted via the communication network to a local actuator (11), **characterised in that** it provides a signal (u) on the basis of; a signal ( $\lambda_x^*$ ) which is generated by a supervisor module (13) and a signal ($\lambda_x$) which is generated by a slip estimator module (14), and wherein a slip estimator module (14) generates a signal ($\lambda_x$) based on a signal ($\omega$) which is provided by a sensory information module (16) and a signal (v) that is generated by a speed estimation module (15), on the basis of sensory measurements provided by a sensory information module (16).

2. The slip reset controller of at least one wheel for vehicle braking systems which provides a signal (u) that is transmitted via the communication network to a local actuator (11), according to claim 1, **characterised in that** it provides a signal (u) based on a signal ( $\lambda_x^*$ ) which is generated by a supervisor module (13), a signal ($\lambda_x$) which is generated by a slip estimator module (14) and in addition a signal (v) that is generated by a speed estimation module (15).

3. The slip reset controller of at least one wheel for vehicle braking systems which provides a signal (u) that is transmitted via the communication network to a local actuator (11), according to claim 1, **characterised in that** it comprises a reset compensator (20), a comparator (22) and a decision module of the reset percentage (23), wherein at the inlet of the reset compensator (20) the following are received: the slip error signal ($e_\lambda$), coming from the comparator (22), where the subtraction of the optimum slip setpoint signal ( $\lambda_x^*$ ) and the current wheel slip ($\lambda_x$) takes place; and a second signal ($p_r$) which is the reset percentage, expressed on a per unit basis, which is applied to the reset compensator (20), obtained in the decision module of the reset percentage (23) based on the current optimum slip setpoint signal ( $\lambda_x^*$ ).

4. The slip reset controller of at least one wheel for vehicle braking systems which provides a signal (u) that is transmitted via the communication network to a local actuator (11), according to claim 2, **characterised in that** it comprises a reset compensator (20), a multiplier (21), a comparator (22) and a decision module of the reset percentage (23), wherein at the inlet of the reset compensator (20) the following are received: an error signal (e), resulting from the embodied product, by means of the multiplier (21), of the vehicle speed signal (v), with the slip error signal ($e_\lambda$), coming from the comparator (22), where the subtraction of the optimum slip setpoint signal ( $\lambda_x^*$ ) and the current wheel slip ($\lambda_x$) takes place; and a second signal ($p_r$) which is the reset percentage, expressed on a per unit basis, which is applied to the reset compensator (20), obtained in the decision module of the reset percentage (23) based on the current optimum slip setpoint signal ( $\lambda_x^*$ ) and the speed (v) at the initial time instant.

5. The slip reset controller of at least one wheel for vehicle braking systems which provides a signal (u) that is transmitted via the communication network to a local actuator (11), according to claims 1-4, **characterised in that** it comprises a reset compensator (20) of the PI (proportional integral) + CI (Clegg integrator) type

6. The slip reset controller of at least one wheel for vehicle braking systems which provides a signal (u) that is transmitted via the communication network to a local actuator (11), according to claims 1-4, **characterised in that** it comprises a reset compensator (20) of the P (proportional) + CI (Clegg integrator) type.

7. The slip reset controller of at least one wheel for vehicle braking systems which provides a signal (u) that is transmitted via the communication network to a local actuator (11), according to claims 1-4, **characterised in that** it comprises a reset compensator (20) having a variable $p_r$ reset percentage.

8. The slip reset controller of at least one wheel for vehicle braking systems, which provides a signal (u) that is transmitted via the communication network to a local actuator (11), according to claims 1-7, **characterised in that** it comprises a reset compensator (20) which further includes a derivative term.

9. The slip reset controller of at least one wheel for vehicle braking systems which provides a signal (u) that is transmitted via the communication network to a local actuator (11), according to claims 1-8, **characterised by** the fact that its integral term will be reset to zero or to a non-null percentage of the previous value.

10. The slip reset controller of at least one wheel for vehicle braking systems which provides a signal (u) that is transmitted via the communication network to a local actuator (11), according to claims 1-9, **characterised by** the fact that the reset condition is based on the zero-crossing of the input signal $(e_\lambda)$ or (e).

11. The slip reset controller of at least one wheel for vehicle braking systems which provides a signal (u) that is transmitted via the communication network to a local actuator (11), according to claims 1-9, **characterised by** the fact that the reset condition is based on the crossing through near-zero band $(-\delta(t) < e(t) < +\delta(t)$, where $\delta(t)$ is a small value) of the input signal $(e_\lambda)$ or (e).

12. The slip reset controller of at least one wheel for vehicle braking systems which provides a signal (u) that is transmitted via the communication network to a local actuator (11), according to claims 1-9, **characterised by** the fact that the reset condition is based on belonging to a conic section of the input signal $(e_\lambda)$ or (e).

13. The slip reset controller of at least one wheel for vehicle braking systems which provides a signal (u) that is transmitted via the communication network to a local actuator (11), according to claims 1-9, **characterised by** the fact that the reset condition is based on strictly temporary criteria.

14. The slip reset controller of at least one wheel for vehicle braking systems, which provides a signal (u) that is transmitted via the communication network to a local actuator (11), according to claims 1-13, **characterised by** the fact that the integral term of the signal (u) is zero.

15. The slip reset controller of at least one wheel for vehicle braking systems, which provides a signal (u) that is transmitted via the communication network to a local actuator (11), according to claims 1-13, **characterised by** the fact that the integral term of the signal (u) is a non-null percentage of the previous value of the integral term.

16. A method for designing a slip reset controller of at least one wheel for vehicle braking systems, which provides a signal (u) that comprises the following stages:

    1) modelling
    2) definition of a basic control structure
    3) establishment of the control objectives
    4) calculation of parameters of the slip reset controller.

17. The method for designing a slip reset controller of at least one wheel for vehicle braking systems which provides a signal (u), according to claim 16, **characterised by** the fact that in stage 1) the modelling is executed on the basis of; a dynamic model that calculates slippage based on braking torque and a tyre-to-road interaction model.

18. The method for designing a slip reset controller of at least one wheel for vehicle braking systems that provides a signal (u), according to claim 17, **characterised by** the fact that in stage 1) it further comprises a delay element.

19. The method for designing a slip reset controller of at least one wheel for vehicle braking systems that provides a signal (u), according to claims 17-18, **characterised by** the fact that in stage 1) it further comprises a saturation element.

20. The method for designing a slip reset controller of at least one wheel for vehicle braking systems that provides a signal (u), according to claims 16-17, **characterised by** the fact that in stage 1) the tyre-to-road interaction model comprises a friction curve model indicative of the characteristics of the road surface.

21. The method for designing a slip reset controller of at least one wheel for vehicle braking systems that provides a signal (u), according to claim 20, **characterised by** the fact that in stage 1) the tyre-to-road friction force is modelled based on the expression of Pacejka constant coefficients.

22. The method for designing a slip reset controller of at least one wheel for vehicle braking systems that provides a signal (u), according to claim 21, **characterised by** the fact that in stage 1) the tyre-to-road friction force is modelled for longitudinal movement according to the formula:

$$f_x = D(\mu_H) \sin\{C \cdot arctg[B \cdot \lambda_x - E(B \cdot \lambda_x - arctg(B \cdot \lambda_x))]\} = f_z \mu(\lambda_x, \mu_H)$$

23. The method for designing a slip reset controller of at least one wheel for vehicle braking systems that provides a signal (u), according to claims 16-22, **characterised by** the fact that in stage 1) the dynamic model is the ¼ vehicle model.

24. The method for designing a slip reset controller of at least one wheel for vehicle braking systems that provides a signal (u), according to claims 16-23, **characterised by** the fact that in stage 1) the dynamic model is the ¼ vehicle model for longitudinal movement according to the equations:

$$\dot{v} = -\frac{f_z \mu}{m},$$

$$\dot{\lambda}_x = \frac{1}{v}\left(-\beta \cdot \mu + \alpha \cdot T_b(t - T)\right)$$

where m is ¼ of vehicle mass, $T_b$ is braking torque, $f_x$ is longitudinal tyre-to-road friction force, $v$ is longitudinal vehicle displacement speed, $f_z$ is normal load, $\mu$ is the normalised non-linear friction function, $T$ is delay, $\lambda_x$ is longitudinal slip and the constant values $\alpha = r/J$, $\beta = (f_z r^2)/J$ are considered.

25. The method for designing a slip reset controller of at least one wheel for vehicle braking systems that provides a signal (u), according to claims 16-24, **characterised by** the fact that in stage 2) the configuration of the control structure is cascaded, which comprises a slip reset controller (12), a saturation element (44), a delay element (43) and a ¼ model (42), wherein the saturation element (44) receives a control signal (u) coming from the slip reset controller (12), at the inlet of the delay element (43) an input signal Tb(t) with limited actuation is received, coming from the saturation element (44), at the inlet of the ¼ model (42) an input signal Tb(t-T) with limited delay actuation is received, coming from the delay element (43), wherein in addition the signal (u) is generated by the controller (12) based on the slip setpoint signal ($\hat{\lambda}_x^*$) and wherein the current slip ($\lambda_x$) and speed (v) are updated by the ¼ model module.

26. The method for designing a slip reset controller of at least one wheel for vehicle braking systems that provides a signal (u), according to claims 16-25, **characterised by** the fact that in state 3) the control objectives comprise: anti-lock conditions, over-oscillation, establishment time, robustness and selection of slip setpoint.

27. The method for designing a slip reset controller of at least one wheel for vehicle braking systems that provides a signal (u), according to claims 16-26, **characterised in that** it further comprises a maximum friction estimator module $\mu_H$, which calculates the output based on signal $\mu$ (actual value of the non-linear friction curve) and the current slip value, which come from the ¼ model (42); $\mu_H$ estimator output (41) will give the estimated maximum friction $\hat{\mu}_H$, which characterises the type of road surface.

28. The method for designing a slip reset controller of at least one wheel for vehicle braking systems that provides a signal (u), according to claim 27, **characterised by** the fact that it uses an estimator based on recursive least squares.

FIG. 1

FIG. 2

FIG. 3

FIG. 4

FIG. 5

**FIG. 6 (a)**

**FIG. 6 (b)**

**FIG. 6 (c)**

**FIG. 6 (d)**

**FIG. 7 (a)**

**FIG. 7 (b)**

**FIG. 7 (c)**

**FIG. 7 (d)**

**FIG. 8 (a)**

FIG. 8 (b)

FIG. 8 (c)

**FIG. 8 (d)**

**FIG. 9**

# INTERNATIONAL SEARCH REPORT

| | International application No. |
|---|---|
| | PCT/ES2014/000173 |

## A. CLASSIFICATION OF SUBJECT MATTER

*B60T8/176* (2006.01)
*G05B11/36* (2006.01)
According to International Patent Classification (IPC) or to both national classification and IPC

## B. FIELDS SEARCHED

Minimum documentation searched (classification system followed by classification symbols)
B60T, G05B

Documentation searched other than minimum documentation to the extent that such documents are included in the fields searched

Electronic data base consulted during the international search (name of data base and, where practicable, search terms used)

EPODOC, INVENES, WPI, PAJ

## C. DOCUMENTS CONSIDERED TO BE RELEVANT

| Category* | Citation of document, with indication, where appropriate, of the relevant passages | Relevant to claim No. |
|---|---|---|
| A | BAÑOS,A; VIDAL, A, Design of PI CI Reset Compensatorfor Second Order Plants, IEEE International Symposiumon Industrial Electronics , SIG 2007, ConferenceProceedings Article, pages 118-123, ISBN: 1-4244-0754-5 | 1-28 |
| A | ES 2323833 A1 (UNIV MURCIA) 24/07/2009, page 3, line 29 - page 11, line 56; figures. | 1-28 |
| A | ZACCARIAN,L; NESIC, D; TEEL A.R, First Order Reset Elementsand The Clegg Integrator Revised, Proceedingsof the 2005 American Control Conference, 2005, volumen1, pages 563-568,ISBN:0-7803-9098-9 | 1-28 |
| A | BARREIRO,A; BAÑOS A, Sistemas of Control Basadosen Reset, Revista Iberoamericana of Automática eInformática, 2012, pages 329-346 | 1-28 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 04/01/2015 | **(14/01/2015)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | P. Pérez Fernández Telephone No. 91 3495496 |

Form PCT/ISA/210 (second sheet) (July 2009)

## INTERNATIONAL SEARCH REPORT

Information on patent family members

| International application No. |
| --- |
| PCT/ES2014/000173 |

| Patent document cited in the search report | Publication date | Patent family member(s) | Publication date |
| --- | --- | --- | --- |
| ES2323833 A1 | 24.07.2009 | WO2008148913 A1 | 11.12.2008 |

Form PCT/ISA/210 (patent family annex) (July 2009)

**EP 3 090 908 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2323833 A1